(19) Europäisches Patentamt
European Patent Office
Office européen des brevets

(11) Publication number: 0 116 758 A1

# (12) EUROPEAN PATENT APPLICATION

(21) Application number: 83307189.7

(22) Date of filing: 24.11.83

(51) Int. Cl.³: C 08 G 18/66
C 08 G 18/48, C 08 G 18/50
C 08 G 18/54, C 08 G 18/12
C 08 G 18/14

(30) Priority: 13.01.83 US 457823

(43) Date of publication of application: 29.08.84 Bulletin 84/35

(84) Designated Contracting States: BE DE FR GB IT

(71) Applicant: TEXACO DEVELOPMENT CORPORATION
2000 Westchester Avenue
White Plains New York 10650(US)

(72) Inventor: Cuscurida, Michael
3543 Greystone Drive
Austin Texas 78731(US)

(72) Inventor: Speranza, George Phillip
2800 Silverleaf
Austin Texas 78757(US)

(74) Representative: Brock, Peter William et al,
Michael Burnside & Partners 2 Serjeants' Inn Fleet Street
London EC4Y 1HL(GB)

## (54) Polyurethane polymer polyols made with aromatic nitrogen-containing polyols and polyurethanes therefrom.

(57) A polyurethane polymer polyol can be made by the reaction of an aromatic nitrogen-containing polyol, a polyether polyol and an organic polyisocyanate. The aromatic nitrogen-containing polyol may be made by reacting 2 to 5 moles of an alkylene oxide, e.g. ethylene or propylene oxide, with 1 mole of the Mannich reaction product of a mole of a phenol, e.g. phenol or nonylphenol, with 1 or 2 moles of a hydroxy amine, e.g. diethanolamine, and may have a molecular weight of 300 to 800. The polyether polyol may have a molecular weight of 3,000 to 8,000. This polyurethane polymer polyol may be used in the manufacture of flexible polyurethane foams which are firmer and stronger than similar products made using conventional polyols.

EP 0 116 758 A1

Croydon Printing Company Ltd

# POLYURETHANE POLYMER POLYOLS MADE WITH AROMATIC NITROGEN-CONTAINING POLYOLS AND POLYURETHANES THEREFROM

The invention relates to the field of polyurethane plastics, and more particularly relates to polyurethane plastics made using polyurethane polymer polyols.

The use of a polyol in the preparation of polyurethanes, by reaction of the polyol with a polyisocyanate in the presence of a catalyst and optionally other ingredients, is well known. Conventional polyols for flexible polyurethane foams are usually made by the reaction of a polyhydric alcohol with an alkylene oxide, usually ethylene oxide and/or propylene oxide, to a molecular weight of 2,000 to 3,000 and above. These polyols are then reacted with polyisocyanate in the presence of water, or other blowing agents such as fluorocarbons, to obtain polyurethane foams. Polyols have been modified in many ways in attempts to improve the properties of the resulting polyurethane.

For example, elastomeric polytetramethylene ether polyurethane polymers may be made from reactions involving a polymethylene ether glycol having a molecular weight of at least 750, an organic diisocyanate and a chain extender containing active hydrogen according to U.S.-A 2 929 800. The glycol may be added to the diisocyanate to form a prepolymer.

U.S.-A 3 294 751 relates to the preparation of polyurethanes via a modified polyol called a ureido-polyol. These low molecular weight ureido-polyols are formed by the reaction of an organic compound having a hydrocarbon group having less than 10 carbon atoms and at least one isocyanate group and an alkanolamine. Further, the invention disclosed in U.S.-A 4 118 376 concerns a hydrocurable composition suitable for use as coatings, adhesives or grouts. The composition contains oxazolidine compounds and free isocyanate group-containing

prepolymers, where the prepolymers are obtained by the reaction of polyisocyanates with special types of dispersions where the dispersed phase is synthesized in situ in a dispersing medium comprising a polyhydroxyl compound.

Other prior art describes modified polyols in which vinyl monomers, such as styrene or acrylonitrile, or other materials such as hydrazine hydrate, have been included to improve the properties of the polyol, and thus the properties of the resulting foam. Some of these prior art materials are, however, highly toxic and require, in addition, stripping of unreacted vinyl monomers or water of hydration. U.S.-A 4 107 102 describes the manufacture of polyurethane foam using a polyol containing hydrazine or its adducts.

DE-A 2 110 055 discloses a process for making a polyurethane product wherein a hydroxyl-containing amine is included in the formulation for a one-shot process. That is, the hydroxyl-containing amine is simply included initially with the polyol and the polyisocyanate and a polyurethane product results. Such a process does not use a polyurea polymer polyol for reaction with a polyisocyanate. Our invention makes polyurethane foams improved over the products of DE-A 2 110 055, as will be made clear by the disclosure and the examples which follow.

U.S.-A 3 325 421 discloses a method of making a stable dispersion of a urea in a composition comprising an organic polyisocyanate, a diamine and a compound having at least two alcoholic hydroxyl groups.

A polymer-modified polyol may be formed by polymerizing an alkanolamine with an organic polyisocyanate in the presence of a polyol, as taught in GB-A 2 072 204. The alkanolamine may react polyfunctionally with the polyisocyanate to produce polyaddition products, which may constitute a stable dispersion in the polyol. The resulting modified polyol is stated to be particularly useful as a polyol starting material for reaction with a polyisocyanate in the manufacture of polyurethane foam.

Stable dispersions are also revealed in U.S.-A 4 089 835. Here, the stable dispersions comprise polyureas and/or polyhydrazo-dicarbonamides as the disperse phase in a hydroxyl group-containing material selected from polyethers, polyesters, polyester amides and polycarbonates. These dispersions may be produced by reacting organic polyisocyanates with polyamines containing primary and/or secondary amino groups and/or hydrazines and/or hydrazides in the hydroxyl-containing material.

Highly related is our own U.S.-A 4 296 213 which relates to polyurea polymer polyols made by the reaction of a hydroxyl-containing amine, a polyether polyol of 3,000 to 8,000 molecular weight and an organic polyisocyanate. The hydroxyl-containing amines are described therein as having a molecular weight from 60 to 200, preferably from 60 to 150. It was not realized that higher molecular weight, hydroxyl-containing amines, which also contain aromatic groups, would also give a polymer polyol which would impart enhanced properties to flexible urethane foams.

The present invention concerns a polyurethane polymer polyol made by the reaction of an aromatic nitrogen-containing polyol, a polyether polyol and an organic polyisocyanate, wherein the mole ratio of aromatic nitrogen-containing polyol to polyether polyol is from 0.5:1 to 3.5:1, and the mole ratio of total hydroxyl groups to isocyanate groups is from 1.5:1 to 3.0:1. This invention also relates to polyurethanes made from such polyurethane polymer polyols.

The polyurethane polymer polyols of this invention are made by the reaction of an aromatic nitrogen-containing polyol, a polyether polyol and an organic polyisocyanate. While these polyols are sometimes referred to in the singular as a polyurethane polymer polyol, it must be remembered that the reaction product is actually a mixture of slightly different polymer polyols.

The aromatic nitrogen-containing polyol may be any

such polyol made by the methods described in U.S.-A 3 297 597 and 4 137 265. Generally, the procedure begins by mixing a phenol and an alkanolamine having the formula:

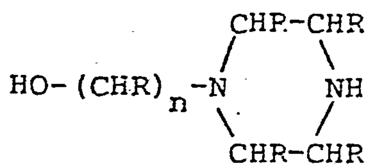

or

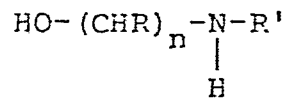

where R is hydrogen or alkyl having 1 to 4 carbon atoms, R' is hydrogen, alkyl having 1 to 4 carbon atoms or $-(CHR)_n-OH$, and n is a positive integer from 2 to 5. Subsequently, formaldehyde is added and the mixture is heated to reduce the formaldehyde content. Water is stripped off to produce the Mannich condensate which is further reacted with an alkylene oxide, preferably ethylene oxide, propylene oxide, butylene oxide, styrene oxide, glycidol or a mixture thereof.

Preferably, the aromatic nitrogen-containing polyol is made by reacting two to five moles of ethylene oxide or propylene oxide with one mole of the Mannich reaction product of a mole of phenol or nonylphenol with one or two moles of diethanolamine. Such polyols are sold commercially as THANOL R-350-X and THANOL R-650-X polyols by Texaco Chemical Company. It is especially preferred that the molecular weight of the aromatic, nitrogen-containing polyol be from 300 to 800.

The polyether polyol which is used preferably has a hydroxyl number between 20 and 60. The polyol is generally an alkylene oxide adduct of a polyhydric alcohol, preferably a trihydric alcohol, with a functionality of from 2 to 4. The alkylene oxide may suitably be ethylene oxide, propylene oxide, or 1,2-butylene oxide or a mixture of some or all of these. The polyol will preferably have a molecular weight of from 2,000 to 10,000 and more preferably, from 3,000 to 8,000. The alkylene oxide is preferably propylene oxide or a mixture of propylene oxide and ethylene oxide. This definition does not include

polyether polyols which contain aromatic or amine groups.

The ratio of moles of hydroxyl-containing amine to moles of polyether polyol should be from 0.5:1 to 3.5:1, and preferably from 0.7:1 to 2.8:1.

The polyisocyanate used herein may be any aromatic or aliphatic polyisocyanate. Typical aromatic polyisocyanates include m-phenylene diisocyanate, p-phenylene diisocyanate, polymethylene polyphenyl polyisocyanates, 2,4-toluene diisocyanate, 2,6-toluene diisocyanate, dianisidine diisocyanate, bitolylene diisocyanate, naphthalene-1,4-diisocyanate, xylylene-1,4-diisocyanate, xylylene-1,3-diisocyanate, bis(4-isocyanatophenyl)-methane, bis(3-methyl-4-isocyanatophenyl)methane, and 4,4'-diphenylpropane diisocyanate, and mixtures thereof.

Greatly preferred aromatic polyisocyanates used in the practice of the invention are 2,4- and 2,6-toluene diisocyanates and methylene-bridged polyphenyl polyisocyanate mixtures which have a functionality of from 2 to 4. These latter isocyanate compounds are generally produced by the phosgenation of corresponding methylene-bridged polyphenyl polyamines, which are conventionally produced by the reaction of formaldehyde and primary aromatic amines, such as aniline, in the presence of hydrochloric acid and/or other acidic catalysts. Known processes for preparing polyamines and corresponding methylene-bridged polyphenyl polyisocyanates therefrom are described in the literature and in many patents; for example, U.S.-A 2 683 730; 2 950 263; 3 012 008; 3 344 162 and 3 362 979.

The most preferred methylene-bridged polyphenyl polyisocyanate mixtures used herein contain 20 to 100 weight % of methylene diphenyldiisocyanate isomers, with any remainder being polymethylene polyphenyl polyisocyanates having higher functionalities and higher molecular weights. Typical of these are polyphenyl polyisocyanate mixtures containing 20 to 100 weight % of methylene diphenyldiisocyanate isomers, of which 20 to 95 weight %

is the 4,4'-isomer, with the remainder being polymethylene polyisocyanates of higher molecular weight and an average functionality of from 2.1 to 3.5. These isocyanate mixtures are known, commercially available, materials and can be prepared by the process described in U.S.-A 3 362 979.

Since the polyurethane polymer polyol has by definition free hydroxyl groups, the amount of polyisocyanate used to form the polyurethane polymer polyol is less than the stoichiometric amount needed to satisfy the active hydrogens of the hydroxyl groups of the polyether polyol, the hydroxyl containing amine and the active amine hydrogens. Therefore, the ratio of moles of hydroxyl groups (from both the polyether polyol and nitrogen-containing polyol) to moles of isocyanate groups should be from 1.5 to 3.0. Preferably, the hydroxyl number of these polyurethane polymer polyols should be from 40 to 75.

It should be noted that the polymer polyols used according to this invention are quite different from the quasi-prepolymers made for rigid foam uses that are described in U.S.-A 3 297 597 and 4 137 265. According to those patents, the quasi-prepolymer is formed by reacting a large molar excess of isocyanate to polyol, in contrast to the excess of polyol to isocyanate employed according to the present invention.

The polyether polyol, aromatic, nitrogen-containing polyol and polyisocyanate can be successfully reacted without application of external heat, and at atmospheric pressure, although higher temperatures and pressures would also be acceptable. The reaction temperature could be between 25 and 100°C.

The polyurethane polymer polyol prepared from the above ingredients is then incorporated into a formulation which results in a polyurethane product. The polyurethane polymer polyol may be used in conjunction with a polyisocyanate, such as those mentioned above, or may be combined with additional polyol, such as those mentioned

above and others, and reacted with a polyisocyanate to form a resulting polyurethane foam product.

The advantage of the foam-forming method of this invention, using the polyurethane polymer polyols described herein, is that flexible urethane foams can be produced which are firmer and stronger than similar products made using conventional polyols. The polyurethane polymer polyols of this invention may also be blended with conventional polyols to enhance the properties of the resulting foams beyond that possible with the conventional polyols alone.

In order to form the polyurethane foam, a catalyst useful in preparing foams of this type is employed in the usual manner. Such catalysts may include one or more of the following:

(a) Tertiary amines such as trimethylamine, triethylamine, N-methylmorpholine, N-ethylmorpholine, N,N-dimethylbenzylamine, N,N-dimethylethanolamine, N,N,N'N'-tetramethyl-1,3-butanediamine, N,N-dimethylpiperazine, and 1,4-diazabicyclo/2.2.2/octane;

(b) Tertiary phosphines, such as trialkylphosphines, and dialkylbenzylphosphines;

(c) Strong bases such as alkali metal and alkaline earth metal hydroxides, alkoxides, and phenoxides;

(d) Acidic metal salts of strong acids such as ferric chloride, stannic chloride, stannous chloride, antimony trichloride, bismuth nitrate and chloride;

(e) Chelates of various metals, such as those which can be obtained from acetylacetone, benzoylacetone, trifluoroacetyl acetone, ethyl acetoacetate, salicyaldehyde, cyclopentanone-1-carboxylate, acetylacetoneimine, bis-acetylacetonealkylenediamines, and salicyclaldehydeimine, with such metals as Be, Mg, Zn, Cd, Pd, Ti, Zr, Sn, As, Bi, Cr, Mo, Mn, Fe, Co, and Ni;

(f) Alcoholates and phenolates of various metals such as $Ti(OR)_4$', $Sn(OR)_4$', and $Al(OR)_3$', wherein R is alkyl or aryl, and the reaction products of alcoholates

with carboxylic acids, beta-diketones, and 2-(N,N-dialkylamino)alkanols;

(g) Salts of organic acids with a variety of metals such as alkali metals, alkaline earth metals, Al, Sn, Pb, Mn, Co, Ni, and Cu; including, for example, sodium acetate, stannous octoate, stannous oleate, lead octoate, metallic driers such as manganese and cobalt naphthenate; and

(h) Organometallic derivatives of tetravalent tin, trivalent and pentavalent As, Sb, or Bi, and carbonyls of iron or cobalt.

Of course combinations of any of the above polyurethane catalysts may be employed. Usually the amount of catalyst employed is from 0.01 to 5.0 weight %, based on polyol. More often the amount of catalyst used is 0.2 to 2.0 weight %.

Foaming is carried out in the presence of water and, optionally, additional organic blowing agents. The water is normally used in amounts of 0.5 to 15 % by weight, preferably, 1.0 to 10 % by weight based on the polyurethane polymer polyol and any additional polyol present. The organic blowing agents, that optionally be used with the water, are known in the art and include, for example, monofluorotrichloromethane, difluorodichloromethane, methylene dichloride and others generally known in the art.

Additives to regulate the cell size and the cell structure, for example, silicone oils such as dimethylpolysiloxanes, may also be added to the foaming mixture. Fillers, flame-retarding additives, dyes or plasticizers of known types may also be used. These and other additives are well known to those skilled in the art.

The invention and its improvement over the art will now be illustrated with the aid of the following nonlimiting Examples.

EXAMPLE 1

Into an 800 $cm^3$ container were charged 300g of THANOL SF-5505 polyol (0.06 mole), 22.2g of THANOL R-350-X (0.0634 mole) and 0.044g of dibutyltin dilaurate. (THANOL SF-5505 is a 550 molecular weight polyether triol based on a glycerine initiator containing approximately 80% primary hydroxyl groups, a product of Texaco Chemical Co.) The above reactants were then mixed for 10 seconds using a high speed mixer. Toluene diisocyanate (10.0g; 0.058 mole) was then added and the mixture was stirred for 10 seconds. The temperature generated in the exothermic reaction peaked at 35°C in approximately two minutes. The resulting product was an off-white, opaque, viscous liquid which had the following properties:

| | |
|---|---|
| Hydroxyl number, mg KOH/g | 50.4 |
| Viscosity, cps, (25°C) | 5680 |
| Mole ratio, total hydroxyl/isocyanate | 2.1 |

EXAMPLE 2

Into an 800 $cm^3$ container were charged 300g of THANOL SF-5505 polyol (0.06 mole), 17.5g of THANOL R-350-X polyol (0.05 mole) and 0.05g of dibutyltin dilaurate. The reactants were then mixed for 10 seconds using a high speed mixer. ISONATE 143L (15.8g; 0.55 mole) was then added and the mixture was stirred for 10 seconds. ISONATE 143L is pure 4,4'-diphenylmethane diisocyanate (MDI) modified so that it is a liquid at temperatures at which MDI crystallizes, and is a product of the Upjohn Company. The reaction temperature peaked at 38°C in approximately five minutes. The resulting product was an off-white, opaque, viscous liquid which had the following properties:

| | |
|---|---|
| Hydroxyl number, mg KOH/g | 70.6 |
| Viscosity, cps (25°C) | 2700 |
| Mole ratio, total hydroxyl/isocyanate | 2.0 |

EXAMPLE 3

Into an 800 $cm^3$ container were charged 300g of a 3,500 molecular weight ethylene oxide/propylene oxide/diglycidyl ether of Bisphenol A adduct of glycerin (0.0857 mole), 17.5g of THANOL R-350-X and 0.05g of dibutyltin dilaurate. The reactants were mixed for 10 seconds using a high speed mixer. ISONATE 143L (15.8g, 0.055 mole) was then added and the mixture was stirred for 10 seconds. The reaction temperature peaked at 33°C in two minutes. The resultant product was an off-white, opaque, viscous liquid which had the following properties:

| | |
|---|---|
| Hydroxyl number, mg KOH/g | 54.4 |
| Viscosity, cps, (25°C) | 5440 |
| Amine content, meq/g | 0.14 |
| Mole ratio, total hydroxyl/isocyanate | 2.5 |

EXAMPLE 4

Into an 800 $cm^3$ container were charged 300g of a 3,500 molecular weight ethylene oxide/propylene oxide/diglycidyl ether of Bisphenol A adduct of glycerin (0.0857 moles), 15g of THANOL R-350-X (0.043 mole) and 0.05g of dibutyltin dilaurate. The reactants were mixed for 10 seconds on a high speed stirrer. ISONATE 143L (18.3g; 0.064 mole) was then added with stirring for 10 seconds. The reaction temperature peaked at 36°C at approximately two minutes. The resultant product was an off-white, opaque, viscous liquid with the following properties:

| | |
|---|---|
| Hydroxyl number, mg KOH/g | 47.3 |
| Viscosity, cps, (25°C) | 12840 |
| Amine content, meq/g | 0.12 |
| Mole ratio, total hydroxyl/isocyanate | 2.0 |

EXAMPLE 5

This example will illustrate a scaled-up preparation of Example 4. Into a two-litre three-necked flask equipped with a thermometer, stirrer, nitrogen source and water condenser were charged 1500g (0.428 moles) of a

3,500 molecular weight ethylene oxide/propylene oxide/diglycidyl ether of Bisphenol A adduct of glycerin, 75g (0.21 mole) of THANOL R-350-X and 0.25g of dibutyltin dilaurate. ISONATE 143L (91.5g; 0.32 mole) was then added to the polyol mixture. The reaction temperature increased from 25 to 38°C with no external heat applied. The reaction mixture was then heated for an additional 1.5 hours. The resultant product was an off-white, opaque, viscous liquid with the following properties:

| | |
|---|---|
| Hydroxyl number, mg KOH/g | 54.1 |
| Viscosity, cps, (25°C) | 10480 |
| Amine content, meq/g | 0.15 |
| Mole ratio, total hydroxyl/isocyanate | 2.0 |

EXAMPLE 6

This example will illustrate the use of the polymer polyol of Example 5 in the preparation of flexible urethane foam. It will further show the improved hardness of foam prepared using this polymer polyol (Foam C) as compared to foams made from prior art polyols (Foams A and B). The prior art polyols used in this study included a 3,000 molecular weight propylene oxide/ethylene oxide adduct of glycerin (THANOL F-3016; Texaco Chemical Co.) and a 3,500 molecular weight propylene oxide/ethylene oxide/diglycidyl ether of Bisphenol A adduct of glycerin. Foam hardness at 33% indentation was measured using a manually operated Chatillon gauge (Manual Model LIC compression tester manufactured by John Chatillon and Sons).

Formulation, details of preparation and foam properties are shown in the following Table:

| | A | B | C |
|---|---|---|---|
| Formulation, (parts by weight) | | | |
| 3,000 molecular weight PO/EO adduct of glycerin[1] | 100 | - | 75 |
| 3,500 molecular weight PO/EO diglycidyl ether of Bisphenol A adduct of glycerin | - | 100 | - |
| Polymer polyol of Example 5 | - | - | 25 |
| Water | 4.0 | 4.0 | 4.0 |
| L-6202 silicone[2] | 1.0 | 1.0 | 1.0 |
| Stannous octoate (50% active) | 0.5 | 0.5 | 0.5 |
| THANCAT TD-33[3] | 0.3 | 0.3 | 0.3 |
| Toluene diisocyanate | 49.7 | 48.4 | 49.7 |
| Isocyanate index | 1.05 | 1.05 | 1.05 |
| Details of Preparation | | | |
| Cream time, seconds | 12 | 12 | 12 |
| Rise time, seconds | 77 | 78 | 74 |
| Postcure, °C (hours) | ...100-105(0.5)... | | |
| Properties | | | |
| Density, $Kg/m^3$ | 24.99 | 25.47 | 24.35 |
| Chatillon gauge (reading at 33%, indentation, Kg) | 2.65 | 2.77 | 3.40 |

[1]THANOL F-3016; product of Texaco Chemical Co.

[2]Product of Union Carbide Corp.

[3]33% solution of triethylenediamine in propylene glycol; product of Texaco Chemical Co.

## EXAMPLE 7

This example will show the improved hardness of foams made using the polymer polyol of Example 5 (Foam D), as compared to foam made from a commercial vinyl polymer modified polymer polyol (NIAX[1] 34-37), Foam E.

Formulations, details of preparation and properties are shown below:

| | D | E |
|---|---|---|
| Formulation, (parts by weight) | | |
| 3,000 molecular weight PO/EO adduct of glycerin | 75 | 75 |
| NIAX 34-37 | - | 25 |
| Polymer polyol of Example 5 | 25 | - |
| Water | 4.0 | 4.0 |
| L-6202 silicone | 1.0 | 1.0 |
| Stannous octoate (50% active) | 0.5 | 0.5 |
| THANCAT TD-33 | 0.3 | 0.3 |
| Toluene diisocyanate | 49.7 | 48.9 |
| Isocyanate index | 1.05 | 1.05 |
| Details of Preparation | | |
| Cream time, seconds | 12 | 12 |
| Rise time, seconds | 74 | 93 |
| Postcure, °C, hours | ..100-105(0.5).. | |
| Properties | | |
| Density, $Kg/m^3$ | 24.35 | 25.79 |
| Chatillon gauge (reading at 33% indentation, Kg) | 3.40 | 2.68 |

[1]Product of Union Carbide Corp.

Many modifications may be made in the methods and polyurethane polymer polyols of this invention. For example, one skilled in the art could devise a particular combination of reacting the aromatic nitrogen-containing polyol, polyisocyanate and polyether polyol to give a polymer polyol with particular desired properties.

CLAIMS:

1. A polyurethane polymer polyol made by the reaction of an aromatic nitrogen-containing polyol, a polyether polyol and an organic polyisocyanate characterized in that the molar ratio of aromatic nitrogen-containing polyol to polyether polyol is 0.5:1 to 3.5:1, and the molar ratio of total hydroxyl groups to isocyanate groups is from 1.5:1 to 3.0:1.

2. A polyurethane polymer polyol according to claim 1 characterized in that the aromatic nitrogen-containing polyol is the reaction product of an alkylene oxide with a Mannich base from a phenol and an alkanolamine of the formula

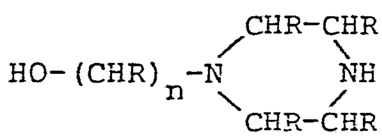

or

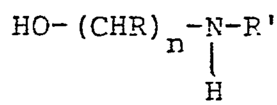

wherein R is hydrogen or alkyl having 1 to 4 carbon atoms, R' is hydrogen, alkyl having 1 to 4 carbon atoms or $-(CHR)_n-OH$, and *n* is a positive integer from 2 to 5.

3. A polyurethane polymer polyol according to claim 2 characterized in that the aromatic nitrogen-containing polyol is made by reacting from 2 to 5 moles of ethylene oxide or propylene oxide with 1 mole of the Mannich reaction product of 1 mole of phenol or nonylphenol with 1 or 2 moles of diethanolamine.

4. A polyurethane polymer polyol according to any one of the preceding claims characterized in that the aromatic nitrogen-containing polyol has a molecular weight of from 300 to 800.

5. A polyurethane polymer polyol according to any one of the preceding claims characterized in that the polyether polyol has a molecular weight from 3,000 to 8,000.

6. A method for producing a polyurethane by reacting a polyisocyanate with at least one active-hydrogen-containing compound, characterized in that the active hydrogen-containing compound comprises a polyurethane polymer polyol according to any one of the preceding claims.

7. A method according to claim 6 characterized in that the active hydrogen-containing compound additionally includes a polyol known per se.

8. A method according to claim 6 or 7 characterized by the presence of water and/or an organic blowing agent whereby to produce a polyurethane foam.

0116758

Application number

European Patent Office

## EUROPEAN SEARCH REPORT

EP 83 30 7189

### DOCUMENTS CONSIDERED TO BE RELEVANT

| Category | Citation of document with indication, where appropriate, of relevant passages | Relevant to claim | CLASSIFICATION OF THE APPLICATION (Int Cl ³) |
|---|---|---|---|
| D,Y | US-A-4 296 213 (M. CUSCURIDA et al.)<br>* Columns 9,10, claims 1,6,11; column 1, line 62 - column 2, line 28; column 4, lines 10-19 *<br>--- | 1,6-8 | C 08 G 18/66<br>C 08 G 18/48<br>C 08 G 18/50<br>C 08 G 18/54<br>C 08 G 18/12<br>C 08 G 18/14 |
| Y | US-A-3 264 268 (E. MULLER et al.)<br>* Columns 6-8, claims 1,4,5; column 1, lines 1-60; column 2, lines 1-8 *<br>--- | 1 | |
| D,A | US-A-3 297 597 (G.D. EDWARDS et al.)<br>* Columns 12,13, claims 1,3,4; column 6, lines 28-51, 57-66 *<br>--- | 1 | |
| A | US-A-3 655 588 (P.R. MOSSO et al.)<br>----- | | TECHNICAL FIELDS SEARCHED (Int. Cl. ³)<br>C 08 G |

The present search report has been drawn up for all claims

| Place of search | Date of completion of the search | Examiner |
|---|---|---|
| THE HAGUE | 04-05-1984 | VAN PUYMBROECK M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document